Europäisches Patentamt

European Patent Office

Office européen des brevets

(19)

(11) Numéro de publication : **0 161 369**
**B1**

# (12) FASCICULE DE BREVET EUROPÉEN

(45) Date de publication du fascicule du brevet :
15.06.88

(51) Int. Cl.⁴ : **E 06 B 3/96**, F 16 B 7/04

(21) Numéro de dépôt : **84402604.7**

(22) Date de dépôt : **14.12.84**

(54) **Equerre de liaison pour réaliser l'assemblage de deux profilés.**

(30) Priorité : **28.03.84 FR 8404857**

(43) Date de publication de la demande :
**21.11.85 Bulletin 85/47**

(45) Mention de la délivrance du brevet :
**15.06.88 Bulletin 88/24**

(84) Etats contractants désignés :
**AT BE CH DE FR GB IT LI LU NL SE**

(56) Documents cités :
**FR-A- 1 440 943**
**FR-A- 2 001 656**
**FR-A- 2 053 635**
**FR-A- 2 157 100**
**FR-A- 2 337 828**
**FR-A- 2 424 434**
**US-A- 3 829 226**

(73) Titulaire : **ALUMAIER**
**20, boulevard Turgot**
**F-13012 Marseille (FR)**

(72) Inventeur : **Leree, Patrick**
**167 Chemin du Pont de Vivaux**
**F-13010 Marseille (FR)**
Inventeur : **Cassard, Michel**
**25, rue de la Saoupe**
**F-13011 Marseille (FR)**

(74) Mandataire : **Grosset-Fournier, Chantal Catherine et al**
**SC Ernest Gutmann/Yves Plasseraud 67 boulevard Haussmann**
**F-75008 Paris (FR)**

## Description

La présente invention concerne des équerres de liaison pour réaliser l'assemblage de deux profilés tubulaires coupés d'onglet, d'une manière amovible.

On connaît déjà des équerres de liaison utilisées à cette fin, de telles équerres se devant d'être d'une manipulation simple, au montage comme au démontage, et de permettre, par conséquent, d'ériger aisément une structure stable facilement transformable.

Le brevet belge 692 401, par exemple, décrit une équerre de liaison de deux profilés tubulaires disposés à angle droit, ladite équerre comprenant un premier élément d'assemblage qui prend appui simultanément contre les parois intérieures des deux profilés, un deuxième élément d'assemblage qui prend appui simultanément contre au moins deux butées qui sont respectivement solidaires des parois extérieures de ces profilés et au moins un troisième élément d'assemblage qui exerce sur les deux premiers éléments une sollicitation par laquelle ces éléments sont écartés l'un de l'autre et sont appliqués fermement contre les parois intérieures et les butées des parois extérieures desdits profilés. Cette équerre présente l'inconvénient de nécessiter l'adjonction d'au moins deux butées solidaires des deux profilés.

D'autre part, le brevet britannique 1 204 404 décrit une équerre sensiblement différente. En effet, ce document présente une équerre d'assemblage comportant deux pions escamotables susceptibles de s'engager dans deux alésages pratiqués dans un profilé récepteur. Ce mode d'assemblage n'est toutefois pas satisfaisant, car il nécessite, afin de réaliser une fixation exempte de jeu, un perçage précis des deux alésages.

La présente invention vise à remédier à ces inconvénients et propose à cet effet une nouvelle équerre de liaison.

La nouvelle équerre de liaison selon l'invention permet de réaliser l'assemblage de deux profilés tubulaires coupés d'onglet, ladite équerre comportant une pièce principale munie de deux branches identiques, chaque branche présentant un faible encombrement de manière à pouvoir se loger à l'intérieur du profilé correspondant.

De façon caractéristique, chacune des deux branches comporte symétriquement un coulisseau et un élément d'actionnement, ledit coulisseau étant muni d'un pion escamotable susceptible de coopérer avec une ouverture pratiquée dans le profilé correspondant, et ledit élément d'actionnement étant muni d'une vis le traversant et d'une pente, ladite branche présentant la forme générale d'un berceau susceptible d'accueillir le coulisseau et l'élément d'actionnement, ledit berceau comportant à une extrémité une pente et à l'autre un épaulement, ledit coulisseau étant situé du côté de l'épaulement et ledit élément d'actionnement du côté de la pente, de façon à ce que, sous l'action d'un enfoncement de la vis dans un alésage taraudé pratiqué dans ladite pièce principale, ledit élément d'actionnement dont la pente coopère avec la pente dudit berceau, par un déplacement vertical pousse ledit berceau dans une direction longitudinale vers l'épaulement de la pièce principale.

La nouvelle équerre de liaison selon l'invention présente de multiples avantages.

En effet, l'équerre de liaison se présente sous une forme monobloc, réduisant ainsi le risque d'égarement des différentes pièces le composant et simplifiant le montage des profilés.

De plus, le montage, outre sa simplicité, est rapide, le clavetage des deux pions maintenant dans un premier temps les deux profilés et permettant d'effectuer rapidement dans un second temps le serrage des deux vis, ce mode d'assemblage ne nécessitant aucune adjonction de pièces.

Plus encore, il permet un serrage énergique des deux profilés, sans toutefois provoquer la déformation de ces derniers, la répartition des efforts s'effectuant d'une façon optimale.

D'autres caractéristiques et avantages de l'invention apparaîtront au cours de la description qui va suivre et sur les dessins auxquels elle fait référence.

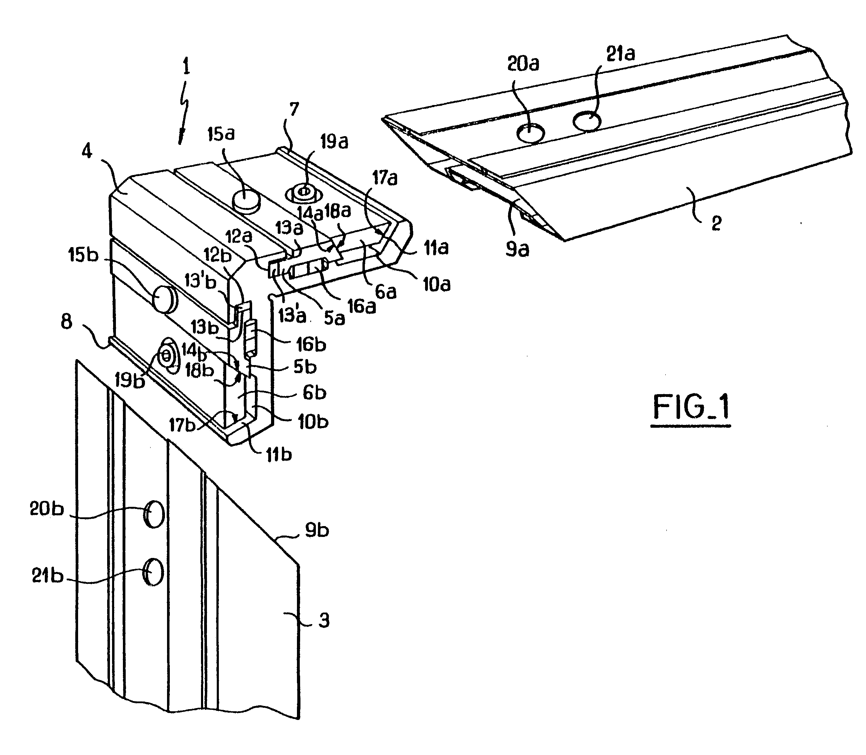

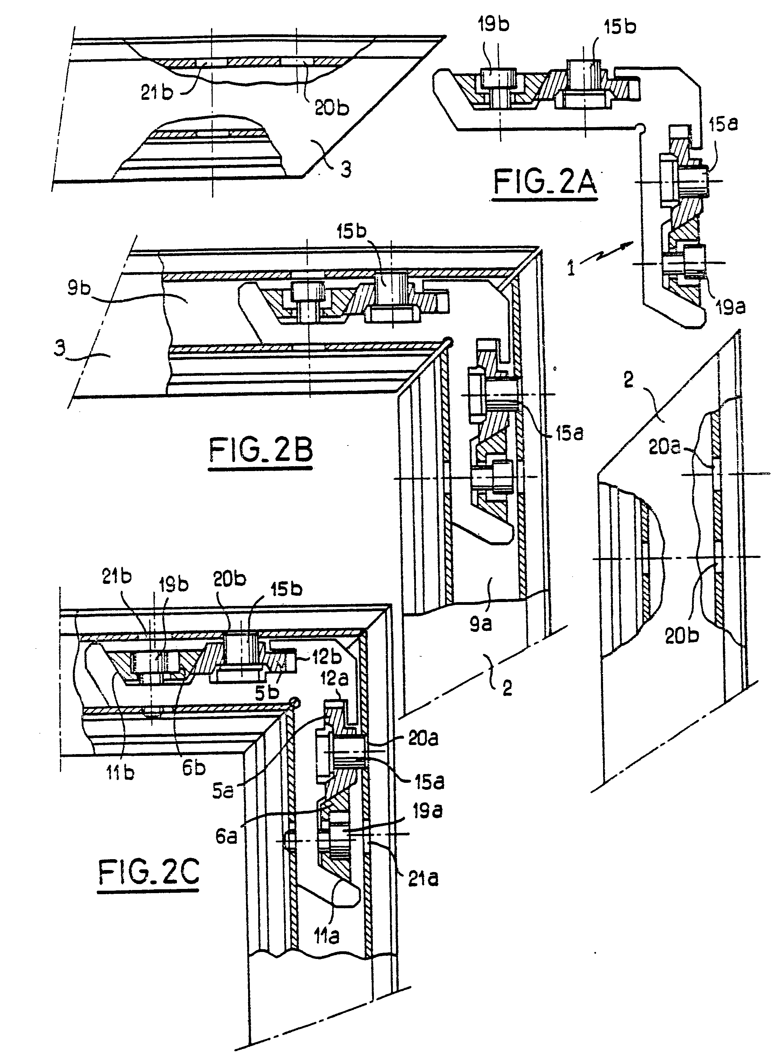

Sur ces dessins, la figure 1 illustre l'invention dans un mode de réalisation préféré, donné à titre d'exemple ; les figures 2a, 2b et 2c illustrent un mode d'assemblage de deux profilés à l'aide de l'équerre de liaison selon l'invention ; sur toutes les figures, les mêmes références désignent les mêmes éléments. Plus précisément :

- La figure 1 est une vue en perspective d'une équerre de liaison selon l'invention, dans un premier mode de réalisation, ;

- La figure 2a est une vue en coupe longitudinale de l'équerre de liaison conforme à la figure 1 et de deux profilés avant assemblage, ;

- La figure 2b représente, en une vue analogue à la précédente, l'équerre de liaison introduite à l'intérieur des deux profilés ;

- La figure 2c représente, en une vue analogue à la précédente, l'assemblage ainsi réalisé; et

- la figure 3 représente en perspective une équerre de liaison selon l'invention, dans un second mode de réalisation.

Comme le montre la figure 1, l'équerre de liaison 1 pour réaliser l'assemblage d'un premier 2 et d'un second 3 profilés tubulaires coupés d'onglet, comporte essentiellement une pièce principale 4, deux coulisseaux 5a et 5b et deux éléments d'actionnement 6a et 6b.

La pièce principale 4 possède deux branches 7 et 8 identiques disposées à angle droit, chaque branche 7 et 8 présentant un faible encombrement de manière à pouvoir se loger facilement à l'intérieur 9a et 9b des profilés 2 et 3 en correspondance. Chaque branche 7 et 8 présente en outre, la forme générale d'un berceau 10a et 10b, comportant à l'extrémité des branches 7 et 8, une pente 11a et 11b, et à l'autre un épaulement 12a et 12b.

Chaque coulisseau 5a et 5b comporte une surface d'appui 13a et 13b susceptible de coopérer par l'intermédiaire d'un bloc en élastomère 13'a et 13'b avec l'épaulement 12a et 12b de chaque berceau 10a et 10b, une pente 14a et 14b susceptible de coopérer avec l'élément d'actionnement 6a et 6b, et un pion escamotable 15a et 15b traversant librement ledit coulisseau 5a et 5b, comportant un épaulement en appui contre ce dernier et reposant sur un bloc en élastomère 16a et 16b.

De plus, chaque élément d'actionnement 6a et 6b comporte une première pente 17a et 17b apte à coopérer avec la pente 11a et 11b de chacune des branches 7 et 8, une seconde pente 18a et 18b apte à coopérer avec la pente 14a et 14b de chacun des coulisseaux 5a et 5b, chaque élément d'actionnement 6a et 6b présentant une section trapézoïdale, et une vis 19a et 19b le traversant, ladite vis 19a et 19b coopérant avec un alésage taraudé ménagé dans chacune des branches 7 et 8.

Comme le montre la figure 1, l'équerre 1 montée se présente sous une forme monobloc, chaque pion 15a et 15b faisant toutefois saillie verticalement au-delà de l'enveloppe du dispositif, chaque pion 15a et 15b étant susceptible de coopérer avec un premier alésage 20a et 20b ménagé dans chacun des profilés 7 et 8, un second alésage 21a et 21b étant également ménagé dans chaque alésage 7 et 8 afin de permettre le passage d'un moyen de serrage des vis 19a et 19b.

On se référera maintenant aux figures 2a, 2b et 2c représentant un exemple d'assemblage de deux profilés à l'aide d'une équerre de liaison selon l'invention.

Comme le montre la figure 2a, on effectue tout d'abord l'assemblage des profilés 2 et 3, en présentant des profilés tubulaires coupés d'onglet face à chacune des branches 7 et 8 du dispositif de liaison 1. Ensuite, et comme le montre la figure 2b, on introduit chaque branche 7 et 8 à l'intérieur 9a et 9b de chaque profilé 2 et 3 après avoir appuyé sur les pions escamotables 15a et 15b jusqu'à ce qu'après avoir coulissé à l'intérieur 9a et 9b de chaque profilé 2 et 3, comme le montre la figure 2c, lesdits pions se trouvent en vis-à-vis des alésages 20a et 20b ménagés dans chaque profilé 2 et 3, lesdits pions 15a et 15b s'engageant alors automatiquement dans lesdits alésages 20a et 20b.

A l'aide d'un moyen de serrage introduit par les alésages 21a et 21b, lesquels permettent d'accéder à la tête de chacune des vis 19a et 19b, on actionne ces dernières. Un serrage des vis 19a et 19b dans la pièce principale 4a provoque un déplacement vertical des éléments d'actionnement 6a et 6b, lesquels, par coopération avec d'une part des pentes 11a et 11b de la pièce principale 4 et avec, d'autre part, des pentes 14a et 14b des coulisseaux 5a et 5b, provoque à son tour le déplacement des coulisseaux 5a et 5b dans une direction longitudinale vers les épaulements 12a et 12b de la pièce principale 4, ceci ayant pour effet de rapprocher les pions 15a et 15b l'un de l'autre et, par conséquent, les profilés 2 et 3.

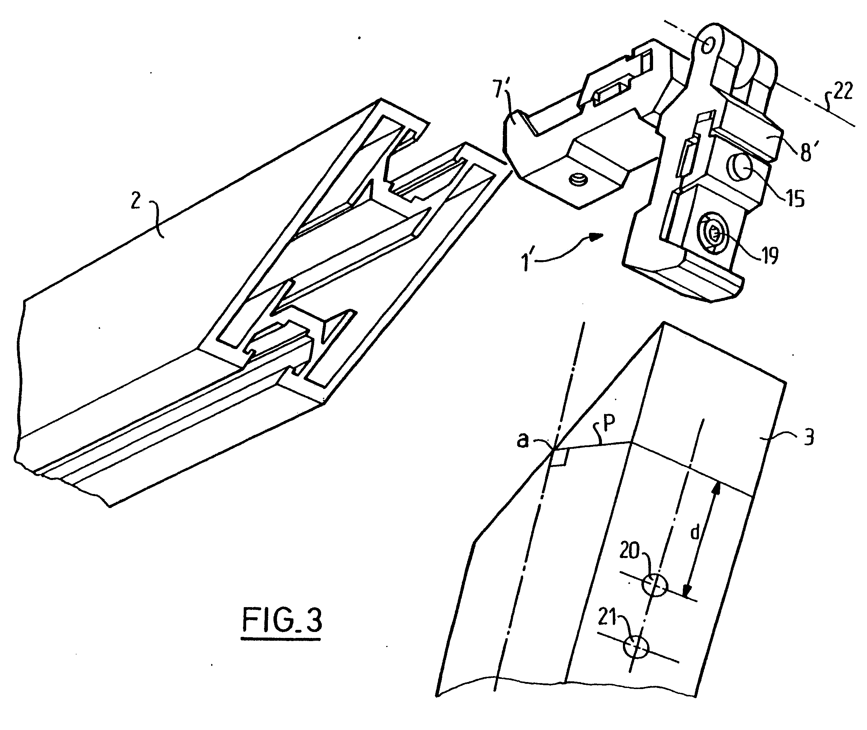

On va maintenant se référer à la figure 3 qui représente une équerre de liaison conforme à la présente invention dans un second mode de réalisation.

Cette équerre permet de réaliser un assemblage de deux profilés 2 et 3 dont seule la coupe d'onglet définit l'angle d'inclinaison de ces derniers une fois assemblés.

Comme le montre la figure 3, l'équerre 1' représentée diffère de celle décrite précédemment en ce que ses branches 7' et 8' sont articulées l'une par rapport à l'autre, autour d'un axe 22 perpendiculaire à la direction longitudinale de chacune des branches 7' et 8'. Cette articulation autorise des assemblages dont l'angle d'inclinaison peut varier entre 30° et 330°.

Les pions escamotables 15 peuvent être indifféremment orientés soit vers l'angle obtus, soit vers l'angle aigu de l'assemblage. Le choix de l'utilisateur sera guidé en fonction de critères d'ordre esthétique ou d'accessibilité.

De plus, l'axe d'articulation 22 étant disposé dans le plan de jonction des profilés, le perçage des alésages 20 et 21 relatifs aux pions escamotables 15 et aux moyens de serrage 19 ne pose aucun problème particulier. En effet, un seul gabarit peut être utilisé indépendamment des variations de l'angle des profilés, la distance d entre un alésage 20 et la projection d'un point a situé dans le plan de jonction selon une perpendiculaire P à l'axe du profilé à percer, restant la même quelque soit l'angle d'inclinaison.

**Revendications**

1. Equerre de liaison permettant de réaliser l'assemblage de deux profilés (2, 3) tubulaires coupés d'onglet, cette équerre comportant une pièce principale (4) munie de deux branches (7, 8) identiques, chaque branche (7, 8) présentant un faible encombrement de manière à pouvoir se loger à l'intérieur (9a, 9b) du profilé (2, 3) correspondant, caractérisée en ce que chacune des deux branches (7, 8) comporte symétriquement un coulisseau (5a, 5b) et un élément d'actionnement (6a, 6b), ledit coulisseau étant muni d'un pion escamotable (15a, 15b) susceptible de coopérer avec une ouverture (20a, 20b) pratiquée dans le profilé (2, 3) correspondant et ledit élément d'actionnement (6a, 6b) étant muni d'une vis (19a, 19b) le traversant et d'une pente (18a, 18b), chaque branche (7, 8) présentant la forme générale d'un berceau (10a, 10b) susceptible d'accueillir le coulisseau (5a, 5b) et l'élément d'actionnement (6a, 6b), ledit berceau (10a, 10b) comportant à une extrémité une pente (11a, 11b) et à l'autre un épaulement (12a, 12b), ledit coulisseau (5a, 5b) étant situé du côté de l'épaulement (12a, 12b) et ledit élément d'actionnement (6a, 6b) du côté de la pente (11a, 11b) de façon à ce que, sous l'action d'un enfoncement de la vis (19a, 19b) dans un alésage taraudé pratiqué dans la pièce principale (4), ledit élément d'actionnement (6a, 6b) dont la pente (18a, 18b) coopère avec la pente (11a, 11b) dudit berceau (10a, 10b), par un déplacement vertical pousse ledit coulisseau (5a, 5b) dans une direction longitudinale vers l'épaulement (12a, 12b) de la pièce principale (4).

2. Equerre selon la revendication 1, caractérisée en ce que chaque coulisseau (5a, 5b) comporte une pente (14a, 14b) coopérant avec une pente (18a, 18b) de chaque élément d'actionnement (6a, 6b), lesquels présentent une section trapézoïdale.

3. Equerre selon l'une des revendications 1 et 2, caractérisée en ce que chaque pion escamotable (19a, 19b) est monté à coulissement dans chaque coulisseau (5a, 5b), lesdits pions escamotables (15a, 15b) étant en appui sur un bloc élastomère (16a et 16b) reposant sur la pièce principale (4).

4. Equerre selon l'une des revendications 1, 2 et 3, caractérisée en ce que chaque coulisseau (5a, 5b) comporte une surface d'appui (13a, 13b) susceptible de coopérer par l'intermédiaire d'un bloc en élastomère (13'a et 13'b) avec chaque épaulement (12a, 12b) de la pièce principale (4).

5. Equerre selon l'une des revendications 1 à 4, caractérisée en ce que chaque profilé comporte un alésage (21a, 21b) permettant d'accéder à la tête de chacune des vis (19a, 19b).

6. Equerre selon l'une des revendications 1 à 5, caractérisée en ce que ses branches (7', 8') sont articulées l'une par rapport à l'autre autour d'un axe (22), cette articulation permettant à l'équerre de réaliser l'assemblage de deux profilés dont seule la coupe d'onglet définit l'inclinaison de ces derniers une fois assemblés.

## Claims

1. Connecting angle bracket making it possible to assemble two mitre-cut tubular sections (2, 3), each angle bracket having a main part (4) with two identical branches (7, 8), each branch (7, 8) having small overall dimensions so that it can be located in the interior (9a, 9b) of the corresponding section (2, 3), characterized in that each of the two branches (7, 8) is symmetrically provided with a slide (5a, 5b) and an actuating member (6a, 6b), said slide being provided with a retractable pin (15a, 15b) able to cooperate with an opening (20a, 20b) made in the corresponding section (2, 3) and said actuating element (6a, 6b) is provided with a screw (19a, 19b) passing through the same and a slope (18a, 18b), each branch (7, 8) having the general shape of a cradle (10a, 10b) which can receive the slide (5a, 5b) and the actuating element (6a, 6b), said cradle (10a, 10b) having at one end a slope (11a, 11b) and at the other a shoulder (12a, 12b) said slide (5a, 5b) being located on the side of shoulder (12a, 12b) and said actuating element (6a, 6b) on the side of the slope (11a, 11b) so that, under the action of the introduction of the screw (19a, 19b) into a taphole made in the main part (4), the actuating element (6a, 6b) whose slope (19a, 19b) cooperates with the slope (11a, 11b) of the cradle (10a, 10b) through a vertical displacement forces the slide (5a, 5b) in a longitudinal direction towards the shoulder (12a, 12b) of the main part (4).

2. Angle bracket according to claim 1, characterized in that each slide (5a, 5b) has a slope (14a, 14b) cooperating with a slope (18a, 18b) of each actuating element (6a, 6b), which have a trapezoidal section.

3. Angle bracket according to either of the claims 1 and 2, characterized in that each retractable pin (19a, 19b) is slidingly mounted in each slide (5a, 5b), said retractable pins (15a, 15b) bearing on an elastomer block (16a, 16b) resting on the main part (4).

4. Angle bracket according to one of the claims 1, 2 and 3, characterized in that each slide (5a, 5b) has a bearing surface (13a, 13b) able to cooperate via an elastomer block (13'a, 13'b) with each shoulder (12a, 12b) of the main part (4).

5. Angle bracket according to any one of the claims 1 to 4, characterized in that each section has a bore (21a, 21b) giving access to the head of each of the screws (19a, 19b).

6. Angle bracket according to any one of the claims 1 to 5, characterized in that its branches (7', 8') are articulated with respect to one another about an axis (22), said articulation enabling the angle bracket to assemble two sections, whereof only the mitre cut defines the inclination of the latter when assembled.

## Patentansprüche

1. Verbindungswinkel zur Ermöglichung der Verbindung zweier rohrartiger auf Gehrung geschnittener Profile (2, 3), der ein mit zwei identischen Schenkeln (7, 8) versehenes Hauptstück (4) enthält, wobei jeder Schenkel (7, 8) einen etwas kleineren Raumbedarf aufweist, so daß er im Inneren (9a, 9b) des entsprechenden Profils (2, 3) untergebracht werden kann, dadurch gekennzeichnet, daß jeder der beiden Schenkel (7, 8) symmetrisch ein Gleitstück (5a, 5b) und ein Betätigungselement (6a, 6b) aufweist, das Gleitstück mit einem versenkbaren Zapfen (15a, 15b) versehen ist, der in der Lage ist, mit einer in dem entsprechenden Profil (2, 3) eingebrachten Öffnung (20a, 20b) zusammenzuwirken, das Betätigungselement (6a, 6b) mit einer es durchquerenden Schraube (19a, 19b) und einer Schrägfläche (18a, 18b) versehen ist, jeder Schenkel (7, 8) die allgemeine Form einer Wiege (10a, 10b) aufweist, die in der Lage ist, das Gleitstück (5a, 5b) und das Betätigungselement (6a, 6b) aufzunehmen, die Wiege (10a, 10b) an einem Ende eine Schrägfläche (11a, 11b) und am anderen Ende eine Schulter (12a, 12b) aufweist, das Gleitstück (5a, 5b) auf der Seite der Schulter (12a, 12b) und das Betätigungselement (6a, 6b) auf der Seite der Schrägfläche (11a, 11b) angeordnet ist, so daß unter der Wirkung eines Eindrehens der Schraube (19a, 19b) in eine in dem Hauptstück (4) eingebrachte Gewindebohrung das Betätigungselement (6a, 6b), dessen Schrägfläche (18a, 18b) mit der Schrägfläche (11a, 11b) der Wiege (10a, 10b) zusammenwirkt, durch eine senkrechte Verlagerung das Gleitstück (5a, 5b) in einer Längsrichtung gegen die Schulter (12a, 12b) des Hauptstücks (4) schiebt.

2. Winkel nach Anspruch 1, dadurch gekennzeichnet, daß jedes Gleitstück (5a, 5b) eine mit einer Schrägfläche (18a, 18b) jedes Betätigungselements (6a, 6b) zusammenwirkende Schrägfläche (14a, 14b) aufweist, wobei die Betätigungselemente (6a, 6b) einen trapezartigen Querschnitt aufweisen.

3. Winkel nach einem der Ansprüche 1 und 2, dadurch gekennzeichnet, daß jeder versenkbare Zapfen (15a, 15b) gleitend in jedem Gleitstück (5a, 5b) befestigt ist, wobei die versenkbaren Zapfen (15a, 15b) sich auf einem Elastomerblock (16a, 16b) aufstützen, der auf dem Hauptstück (4) ruht.

4. Winkel nach einem der Ansprüche 1, 2 und 3, dadurch gekennzeichnet, daß jedes Gleitstück (5a, 5b) eine Stützoberfläche (13a, 13b) aufweist, die in der Lage ist, über einen Elastomerblock (13'a, 13'b) mit jeder Schulter (12a, 12b) des Hauptstücks (4) zusammenzuwirken.

5. Winkel nach einem der Ansprüche 1-4, dadurch gekennzeichnet, daß jedes Profil eine Bohrung (21a, 21b) aufweist, die den Zugang zu dem Kopf jeder der Schrauben (19a, 19b) ermöglicht.

6. Winkel nach einem der Ansprüche 1-5, dadurch gekennzeichnet, daß seine Schenkel (7', 8') gegenseitig um eine Achse (22) schwenkbar angelenkt sind, wobei dieses Gelenk es dem Winkel ermöglicht, die Verbindung zweier Profile zu realisieren, von denen nur der Gehrungsschnitt die Neigung dieser einmal zusammengesetzten Profile definiert.

FIG_1

0 161 369

FIG.2A

FIG.2B

FIG.2C

FIG.3